# EUROPEAN PATENT APPLICATION

(11) **EP 2 749 750 A1**
(43) Date of publication of application: **02.07.2014**
(21) Application number: 13199323.0
(22) Date of filing: 23.12.2013
(51) Int. Cl.: F02B 33/40, F02B 39/02

(54) **Automatic blade-type turbo system**

(30) Priority: 28.12.2012 TW 101225405
(71) Applicant: Hsu, Yung Chun, Keelung City 20543 (TW)
(72) Inventor: Hsu, Yung Chun, Keelung City 20543 (TW)
(74) Representative: Cabinet Chaillot

(57) **Abstract**

An automatic blade-type turbo system (2) includes an automatic blade-type turbine (50) provided in an intake hose (40) extended between an engine (20) and an air cleaner (30). The automatic blade-type turbine (50) includes a casing (51) fitly mounted in the intake hose (40) and internally defining a receiving space (511), in which a mandrel (514) is provided. The automatic blade-type turbine (50) includes a plurality of fan blade units (53) fitted around a plurality of rotational elements (52), which are then mounted around the mandrel (514) for the fan blade units (53) to locate in the receiving space (511)via two open ends (512, 513) of the casing (51). Intake air flowing from the air cleaner (30) to the engine (20) via the intake hose (40) rotates the fan blade units (53) and the rotating fan blade units (53) in turn increase the oxygen content of the intake air, enabling complete combustion of fossil fuel in the engine (20) to enhance the engine's performance and effectively reduce the carbon dioxide discharged from the engine (20).

## Description

### FIELD OF THE INVENTION

The present invention relates to an automatic blade-type turbo system that includes an automatic blade-type turbine provided in an intake hose extended between an air cleaner and an engine, and more particularly, to an automatic blade-type turbo system that is able to increase the oxygen content in the intake air to enable complete combustion of the fossil fuel in the engine and enhanced engine performance.

### BACKGROUND OF THE INVENTION

Presently, fossil fuel is the most convenient fuel that efficiently provides people with needful power. Therefore, fossil fuel is widely used in aerospace technological field, vehicles, ships and vessels, power generators and so on for an engine to produce power. However, the fossil fuel deposits are reduced day by day with the increased consumption of fossil fuel, such as petroleum or other fuel oils, which results in the constantly increased purchase expenditure for oils in all oil consumption countries.

It is known the oil tanks and oil pipes for general vehicles will adsorb impurities, and oil in such oil tanks and oil pipes will have increased molecular size due to the adsorbed impurities. As a result, the oil molecular groups lose their initial purity and could not be refined to achieve complete burning thereof. Incomplete combustion of oil in turn causes excessive oil consumption, air pollution emissions and many other environmentally unfriendly problems. Therefore, it has become the most important issue in the world as how to save petroleum and other fuel oils to achieve the purpose of environment protection.

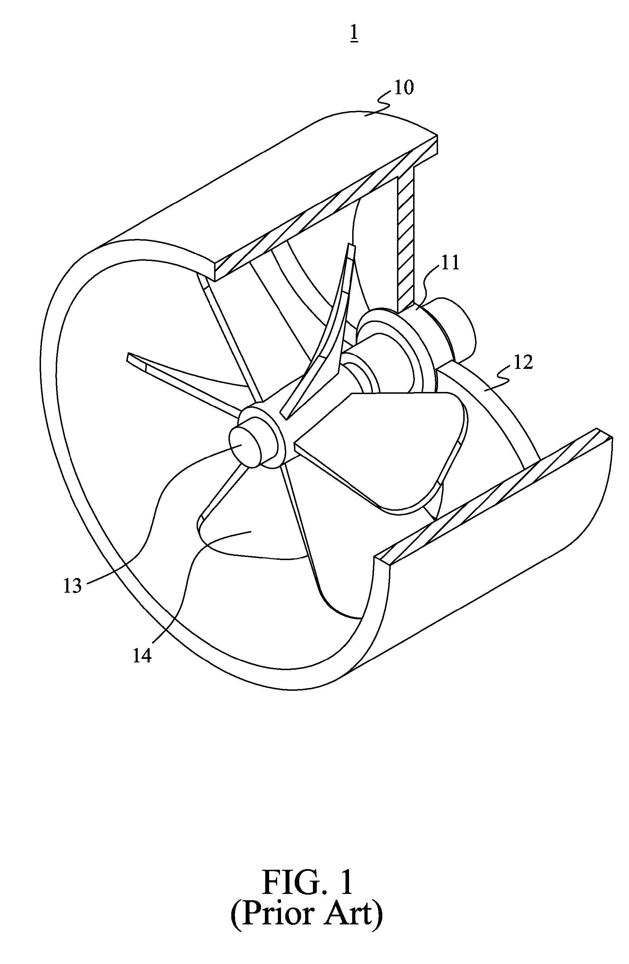

Fig. 1 shows a conventional turbo charger 1 for mounting in an intake hose. As shown, the turbo charger 1 includes a cylindrical pipe 10, a shaft holder 11 located in the cylindrical pipe 10, a plurality of locating supports 12 radially outward extended from the shaft holder 11 to connect to an inner surface of the cylindrical pipe 10, a rotary shaft 13 held to the shaft holder 11, and a fan blade unit 14 mounted on the rotary shaft 13.

When an engine is in the intake stroke, the pistons thereof moves reciprocatingly to produce vacuum in the cylinders, so that a pressure difference is existing between the engine and an air cleaner. This pressure difference produces a suction force, which brings compression and forward movement of intake air in the intake hose. Further, through rotation of the fan blade unit 14, increased air flow efficiency is achieved to minimize the problem of insufficient air for the fuel combustion in the engine. However, while the conventional turbo charger 1 solves the problem of insufficient air intake of the engine, the produced flow of air intake is insufficient and unstable. Therefore, the air sucked into the engine fails to fully mix with the fuel to achieve complete combustion in the engine, and the engine power could not be fully utilized. That is why all the cars have the problems of delayed start, high fuel consumption and lowered acceleration capacity.

Therefore, it is necessary to improve the conventional turbo charger by better utilizing the intake hose thereof, so as to increase the oxygen content in the intake air for completely burning the fossil fuel in the engine and enhancing the engine's performance.

### SUMMARY OF THE INVENTION

A primary object of the present invention is to provide an automatic blade-type turbine in an intake hose for intake air flowing from an air cleaner via the intake hose to an engine to rotate a plurality of fan blade units of the turbine, so that the rotating fan blade units in turn increase the oxygen content in the intake air to achieve complete combustion of fossil fuel in the engine, enabling enhanced engine performance and reduced carbon dioxide emission from the engine.

Another object of the present invention is to provide an automatic blade-type turbine that includes a plurality of fan blade units for producing high back pressure in an intake hose for an engine to produce high torque.

To achieve the above and other objects, the present invention provides an automatic blade-type turbo system, which includes an automatic blade-type turbine provided in an intake hose extended between an air cleaner and an engine. The automatic blade-type turbine includes a casing fitly mounted in the intake hose, and the casing internally defines a receiving space and has a first and an opposite second open end communicable with the receiving space. The receiving space is internally provided with a mandrel extended toward the first and the second open end of the casing. The mandrel has at least one locating element formed thereon to radially outward extend to an inner surface of the casing and has a first end and an opposite second end. The automatic blade-type turbo system is characterized by that the automatic blade-type turbine includes a plurality of rotational elements respectively having a first outer surface with a first outer diameter and a first inner surface with a first inner diameter, and a plurality of fan blade units respectively having a second inner surface with a second inner diameter. Each of the rotational elements is fitted in one of the fan blade units with the first outer surface of the rotational element fitly contacting with the second inner surface of the fan blade unit, and is then mounted around the mandrel with the first inner surface of the rotational element rotatably contacting with the mandrel, such that all the fan blade units fitted around the rotational elements are located in the receiving space via the first open end and the second open end of the casing to rotate in the same direction with the help of the rotational elements.

In a preferred embodiment, the rotational elements are respectively a bearing, and the fan blade units are located in the receiving space in series.

In addition, the automatic blade-type turbine further includes at least one spacer provided on the mandrel between any two adjacent fan blade units. Moreover, the automatic blade-type turbine includes two stoppers connected to the first and the second end of the mandrel.

With the automatic blade-type turbine mounted in the intake hose, the intake air transferred from the air cleaner to the engine via the intake hose can rotate the fan blade units, and the rotating fan blade units in turn increase the oxygen content per unit volume of the intake air. The intake air with higher oxygen content is helpful in the complete combustion of the fossil fuel in the engine to enhance the engine's performance and effectively reduce the carbon dioxide discharged from the engine. Further, with the fan blade units included in the automatic blade-type turbine, high back pressure can be produced in the intake hose for the engine to produce high torque.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a cutaway view of a conventional turbo charger;
Fig. 2 schematically shows an arrangement of an automatic blade-type turbo system according to an embodiment of the present invention;
Fig. 3 is an exploded perspective view of the automatic blade-type turbo system of
Fig. 2;

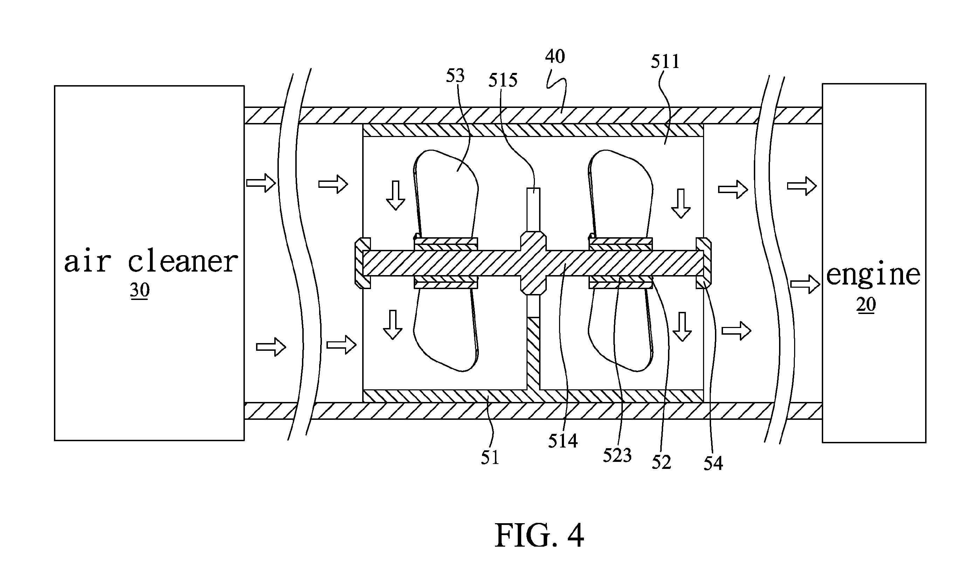

Fig. 4 schematically shows the operation of the automatic blade-type turbo system of
Fig. 2;

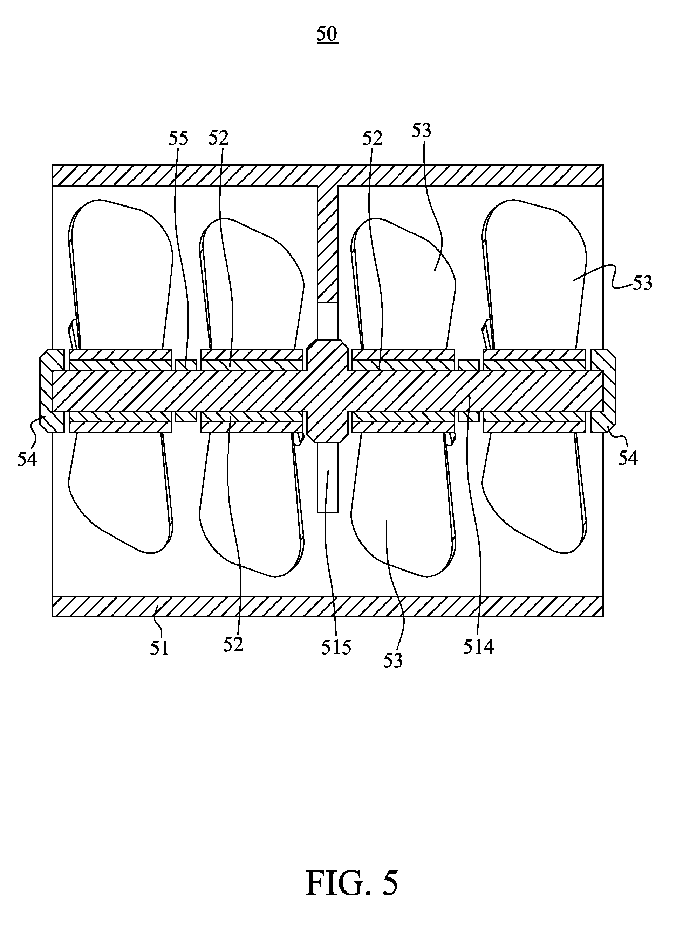

Fig. 5 is a longitudinal sectional view showing more fan blade units are provided in an automatic blade-type turbine for the present invention; and

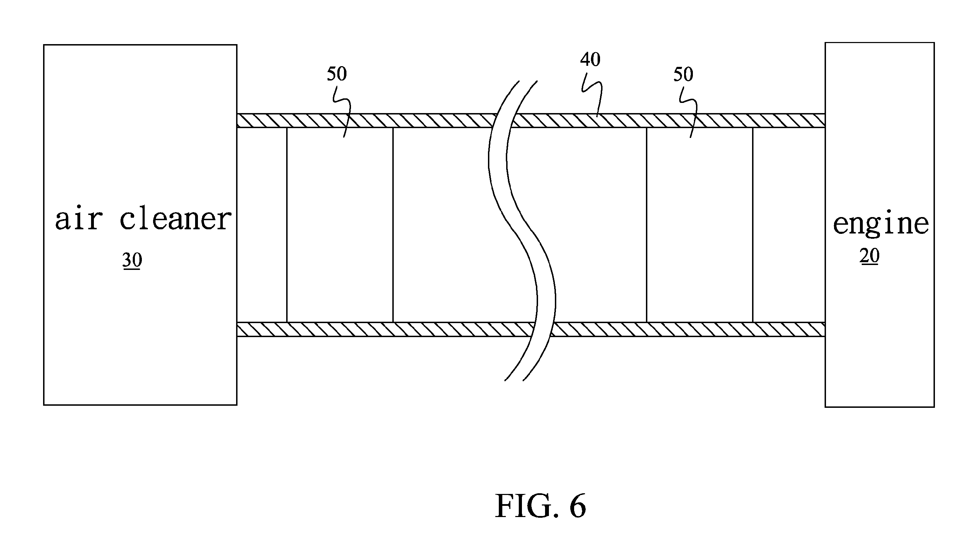

Fig. 6 schematically shows more than one automatic blade-type turbine according to the present invention can be provided in an intake hose.

### DETAILED DESCRIPTION OF THE PREFERRED EMBODIMENTS

The present invention will now be described with some preferred embodiments thereof and with reference to the accompanying drawings. For the purpose of easy to understand, elements that are the same in the preferred embodiments are denoted by the same reference numerals.

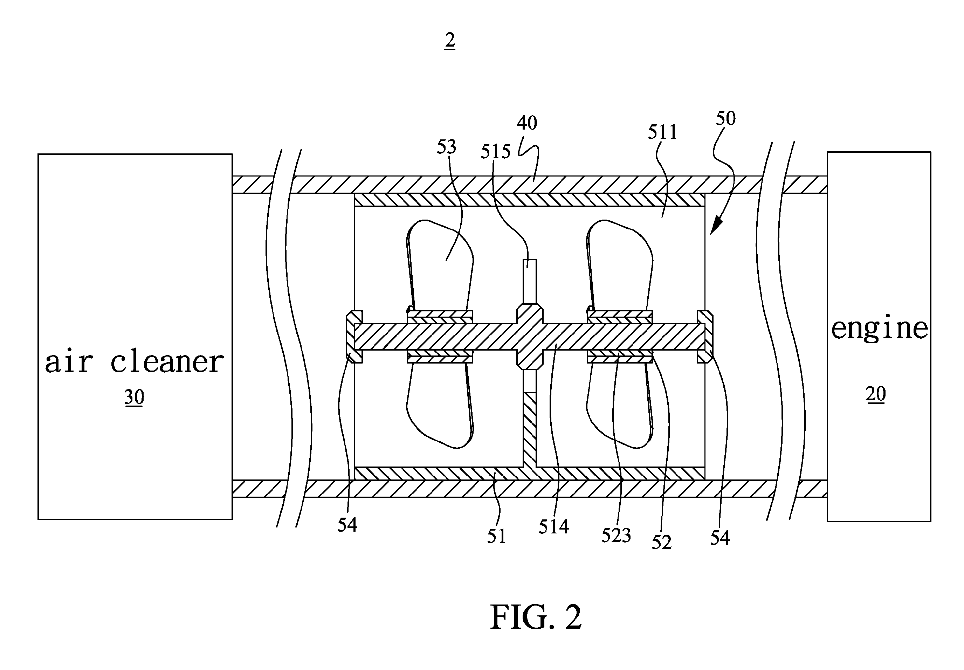

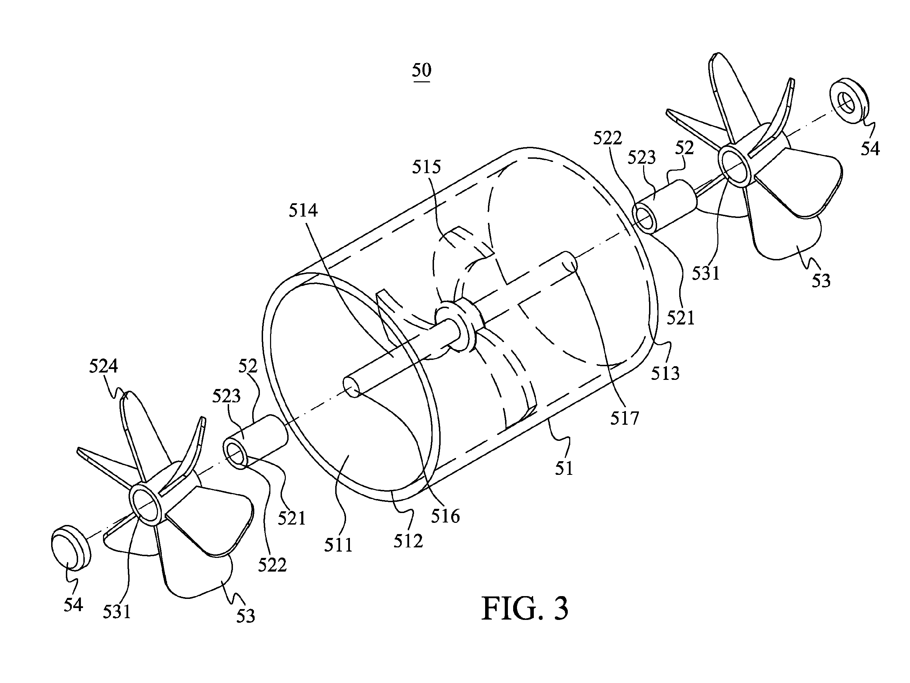

Please refer to Figs. 2 and 3. An automatic blade-type turbo system 2 according to an embodiment of the present invention includes an automatic blade-type turbine 50 provided in a length of intake hose 40, which is extended between an engine 20 and an air cleaner 30.

As shown, according to a preferred embodiment of the present invention, the automatic blade-type turbine 50 includes a casing 51 fitly mounted in the intake hose 40. The casing 51 internally defines a receiving space 511 and has a first open end 512 and an opposite second open end 513 communicable with the receiving space 511. A mandrel 514 is provided in the receiving space 511 to extend toward the first open end 511 and the second open end 512 of the casing 51. At least one locating element 515 is formed on the mandrel 514 to radially outward extend to an inner surface of the casing 51. And, the mandrel 514 has a first end 516 and an opposite second end 517.

The present invention is characterized in that the automatic blade-type turbine 50 includes a plurality of rotational elements 52, each of which has a first outer surface 521 with a first outer diameter and a first inner surface 522 with a first inner diameter; and a plurality of fan blade units 53, each of which has a second inner surface 531 with a second inner diameter. Each of the rotational elements 52 is fitted in one of the fan blade unit 53 with the first outer surface 521 of the rotational element 52 fitly contacting with the second inner surface 531 of the fan blade unit 53. The rotational element 52 is then mounted around the mandrel 514 with the first inner surface 522 of the rotational element 52 rotatably contacting with the mandrel 514. In this manner, all the fan blade units 53 fitted around the rotational elements 52 can be located in the receiving space 511 via the first open end 512 and the second open end 513 of the casing 51.

Please refer to Fig. 3 along with Fig. 4, which shows the automatic blade-type turbine 50 in operation. When the engine 20 is in the intake stroke, pistons (not shown) in the engine 20 start moving reciprocatingly, such that a pressure difference is produced between the air cleaner 30 and the engine 20, allowing the intake air to be transferred from the air cleaner 30 to the engine 20 via the intake hose 40. Before being transferred to the engine 20, the intake air first passes through the automatic blade-type turbine 50. In the automatic blade-type turbine 50, the fan blade units 53 are actually located in the receiving space 511 in series. When the intake air flows through the first open end 512 of the casing 51, the fan blade unit 53 closest to the first open end 512 is driven by the intake air to rotate. Being helped by the rotational element 52, the fan blade unit 53 is able to rotate about the mandrel 514 continuously. Then, when the intake air flows toward the second open end 513 of the casing 51, all the fan blade units 53 arranged from the first open end 512 toward the second open end 513 are brought to rotate about the mandrel 514 one by one. It is noted all the fan blade units 53 rotate in the same direction in the receiving space 511. In the illustrated embodiment, the rotational elements 52 are respectively a bearing 523. However, it is understood the describing of the rotational elements 52 as bearings 523 is only illustrative and not intended to limit the type of the rotational elements 52 in any way. That is, the rotational elements 52 can be differently configured according to actual need in use.

When flowing from the air cleaner 30 to the engine 20, the intake air sequentially passes through each of the fan blade units 53 and drives them to rotate. Since the rotating fan blade units 53 are helpful in increasing the oxygen content per unit volume of the intake air, the engine 20 will receive air with higher oxygen content, which helps in the complete combustion of the fossil fuel to enhance the engine's performance and effectively reduce the carbon dioxide discharged from the engine 20. In addition, to prevent the rotating fan blade units 53 from moving out of the first end 516 and the second end 517 of the mandrel 514, two stoppers 54 are connected to the first and the second end 516, 517 of the mandrel 514.

Please refer to Fig. 5. According to the desired engine performance and the desired air intake at the air cleaner 30, the number of the fan blade units 53 mounted in the receiving space 511 of the casing 51 can be increased to achieve the effect of increasing the oxygen content in the intake air. In this case, a spacer 55 may be further provided on the mandrel 514 between any two adjacent fan blade units 53 to prevent the rotating fan blade units 53 from shifting along the mandrel 514 to collide with one another, which would indirectly lower the effect of increasing the oxygen content in the intake air. In another operable embodiment, as shown in Fig. 6, more than one automatic blade-type turbine 50 can be provided in the intake hose 40 to increase the number of the fan blade units 53 and achieve the effect of increasing the oxygen content in the intake air.

In conclusion, with the automatic blade-type turbine mounted in the intake hose between the engine and the air cleaner, the automatic blade-type turbo system according to the present invention enables the intake air transferred from the air cleaner to the engine via the intake hose to rotate the fan blade units, and the rotating fan blade units in turn increase the oxygen content per unit volume of the intake air. The intake air with higher oxygen content is helpful in the complete combustion of the fossil fuel in the engine to enhance the engine's performance and effectively reduce the carbon dioxide discharged from the engine.

The present invention has been described with some preferred embodiments thereof and it is understood that many changes and modifications in the described embodiments can be carried out without departing from the scope and the spirit of the invention that is intended to be limited only by the appended claims.

## Claims

1. An automatic blade-type turbo system, comprising an automatic blade-type turbine provided in a length of intake hose, which is extended between an engine and an air cleaner; the automatic blade-type turbine including a casing fitly mounted in the intake hose, and the casing internally defining a receiving space and having a first and an opposite second open end communicable with the receiving space; the receiving space being internally provided with a mandrel extended toward the first and the second open end of the casing; and the mandrel having at least one locating element formed thereon to radially outward extend to an inner surface of the casing and having a first end and an opposite second end; the automatic blade-type turbo system being **characterized by** that:
the automatic blade-type turbine includes a plurality of rotational elements respectively having a first outer surface with a first outer diameter and a first inner surface with a first inner diameter, and a plurality of fan blade units respectively having a second inner surface with a second inner diameter; each of the rotational elements being fitted in one of the fan blade units with the first outer surface of the rotational element fitly contacting with the second inner surface of the fan blade unit, and then being mounted around the mandrel with the first inner surface of the rotational element rotatably contacting with the mandrel, such that all the fan blade units fitted around the rotational elements are located in the receiving space via the first open end and the second open end of the casing to rotate in the same direction with the help of the rotational elements.

2. The automatic blade-type turbo system as claimed in claim 1, wherein the rotational elements are respectively a bearing.

3. The automatic blade-type turbo system as claimed in claim 1, wherein the fan blade units are located in the receiving space in series.

4. The automatic blade-type turbo system as claimed in claim 1, wherein the automatic blade-type turbine further includes at least one spacer provided on the mandrel between any two adjacent fan blade units.

5. The automatic blade-type turbo system as claimed in claim 1, wherein the automatic blade-type turbine includes two stoppers connected to the first and the second end of the mandrel.
